# EUROPEAN PATENT SPECIFICATION

(11) **EP 1 973 367 B1**
(45) Date of publication and mention of the grant of the patent: **19.09.2018**
(21) Application number: 08005495.0
(22) Date of filing: 25.03.2008
(51) Int. Cl.: H04W 72/04, H04W 36/08

(54) **METHOD AND APPARATUS FOR HANDOVER IN A WIRELESS COMMUNICATION SYSTEM, AS WELL AS SYSTEM THEREOF**
VERFAHREN UND VORRICHTUNG FÜR DAS WEITERREICHEN IN EINEM DRAHTLOSEN KOMMUNIKATIONSSYSTEM UND SYSTEM DAFÜR
PROCÉDÉ ET APPAREIL POUR TRANSFERT DANS UN SYSTÈME DE COMMUNICATION SANS FIL, ET SYSTÈME CORRESPONDANT

(30) Priority: 22.03.2007 KR 20070028312; 28.03.2007 KR 20070030573
(43) Date of publication of application: 24.09.2008
(73) Proprietor: Samsung Electronics Co., Ltd., Suwon-si, Gyeonggi-do, 443-742 (KR)
(72) Inventor: Jeong, Kyeong-In, Suwon-si Gyeonggi-do (KR); Kim, Soeng-Hun, Suwon-si Gyeonggi-do (KR); Van Lieshout, Gert Jan, Middlesex TW 18 4QE (GB)
(74) Representative: Nederlandsch Octrooibureau

(56) References cited:
- IPWIRELESS: "Contention-free Intra-LTE handover", 3GPP DRAFT; R2-070646, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070209, 9 February 2007 (2007-02-09), XP050133690, [retrieved on 2007-02-09]
- MOTOROLA: "Contention-free Intra-LTE Handover", 3GPP DRAFT; R2-070730-NON_CONT_HANDOFF_V01, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070209, 9 February 2007 (2007-02-09), XP050133763, [retrieved on 2007-02-09]
- SAMSUNG: "UL synchronized handover", 3GPP DRAFT; R2-073312, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20070814, 14 August 2007 (2007-08-14), XP050136025, [retrieved on 2007-08-14]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 1 March 2007 (2007-03-01), pages 1-82, XP050380472,

## Description

### BACKGROUND OF THE INVENTION

### 1. Field of the Invention

The present invention generally relates to a method and apparatus for performing a handover of a User Equipment (UE) in a wireless communication system and a system thereof. More particularly, the present invention relates to a handover method and apparatus for efficiently allocating resources to a UE during a handover of the UE in a wireless communication system and a system thereof.

### 2. Description of the Related Art

Universal Mobile Telecommunications System (UMTS) is a 3^{rd} Generation (3G) asynchronous mobile communication system operating in Wideband Code Division Multiple Access (WCDMA) based on European systems, Global System for Mobile communications (GSM) and General Packet Radio Services (GPRS). The 3^{rd} Generation Partnership Project (3GPP) that standardized UMTS is now discussing Long Term Evolution (LTE) as the next generation of UMTS, Evolved UMTS. The 3GPP LTE is a technology for enabling packet communications at or above 100Mbps (Megabits per second). For deploying the LTE system, many communication schemes have been proposed. Among them, there are schemes of reducing the number of nodes on a communication line by simplifying a network configuration or of optimizing radio protocols for radio channels.

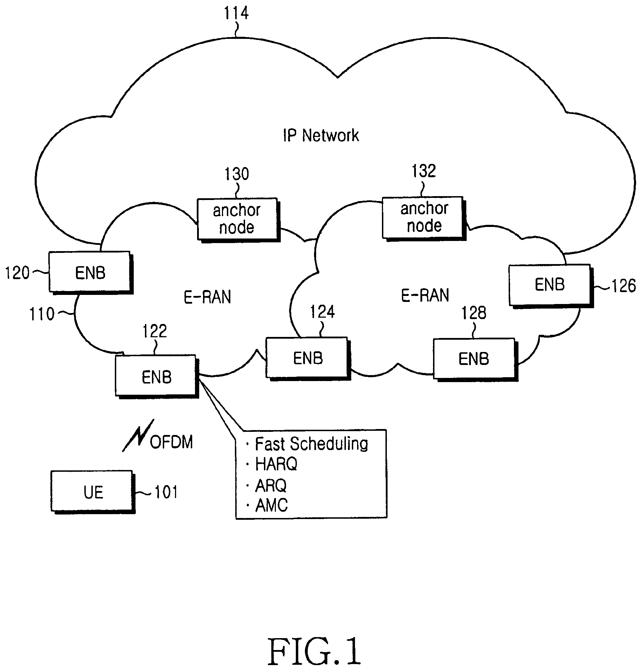

FIG. 1 shows a conventional Evolved UMTS mobile communication system.

Referring to FIG. 1, each of Evolved UMTS Radio Access Networks (E-UTRANs) 110 is simplified to a 2-node structure including Evolved Node Bs (ENBs) 120, 122, 124 and an anchor node 130, or ENBs 126 and 128 and an anchor node 132. A UE 101 is connected to an Internet Protocol (IP) network 114 via an E-UTRAN 110. The ENBs 120 to 128 correspond to legacy Node Bs in the UMTS system and are connected to the UE 101 via radio channels. Compared to the legacy Node Bs, the ENBs 120 to 128 play a more complex role.

Since all user traffic including real-time service such as Voice Over IP (VoIP) is serviced on shared channels in the 3GPP LTE, an entity for collecting the status information of UEs and scheduling them is needed and the ENBs 120 to 128 are responsible for the scheduling. Generally, one ENB controls a plurality of cells. The ENBs 120 to 128 also perform Adaptive Modulation and Coding (AMC) by selecting a modulation scheme and a channel coding rate for a UE adaptively according to the channel status of the UE. As with High Speed Downlink Packet Access (HSDPA) and High Speed Uplink Packet Access (HSUPA) of UMTS (or called Enhanced Dedicated CHannel (EDCH)), the LTE system uses Hybrid Automatic Repeat reQuest (HARQ) between the ENBs 120 to 128 and the UE 101. Considering that a variety of Quality of Service (QoS) requirements cannot be fulfilled with HARQ alone, a high layer may perform an outer ARQ between the UE 101 and the ENBs 120 to 128. HARQ is a technique for increasing reception success rate by soft-combining previous received data with retransmitted data without discarding the previous data. High-speed packet communication systems such as HSDPA and EDCH use HARQ to increase transmission efficiency. To realize a data rate of up to 100Mbps, it is expected that the LTE system will adopt Orthogonal Frequency Division Multiplexing (OFDM) in a 20-MHz bandwidth as a radio access technology.

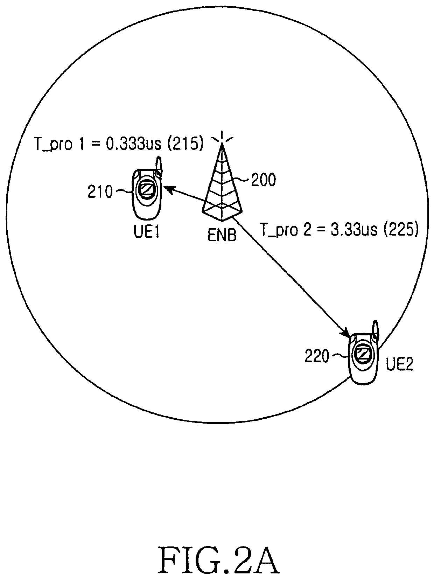

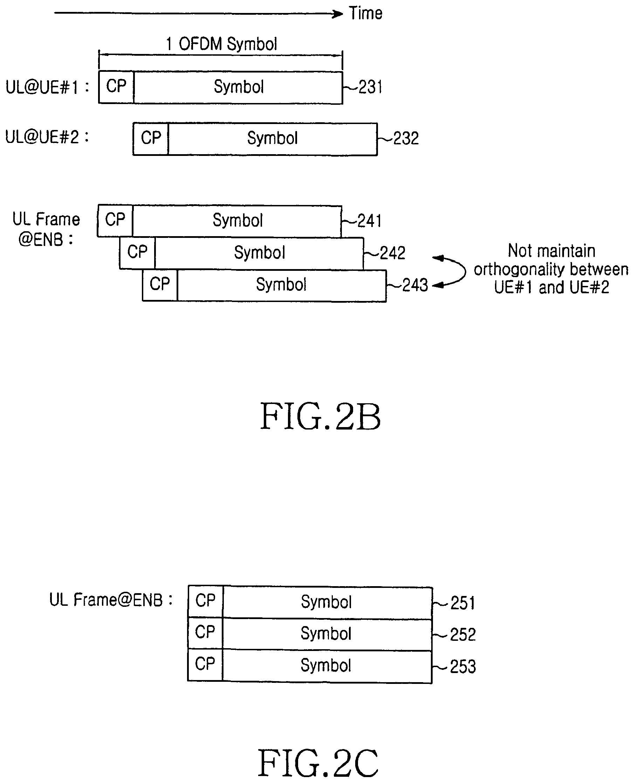

FIGS. 2A, 2B and 2C show the need for and the role of uplink timing synchronization in a conventional 3GPP LTE-OFDM system.

Referring to FIG. 2A, a first UE 210 (UE #1) is near to an ENB 200 and a second UE 220 (UE #2) is remote from the ENB 200. Radio propagation from the ENB 200 to UE #1 has a propagation time delay 215, T_pro 1, and radio propagation from the ENB 200 to UE #2 has a propagation time delay 225, T_pro 2. Because the closeness of UE #1 to the ENB 200 relative to UE #2, T_pro 1 is shorter than T_pro 2.

Therefore, when UE #1 and UE #2 within the same cell of the ENB 200 are in power-on state or idle mode, uplink timing is not synchronized among UE #1, UE #2, and UEs detected by the ENB 200 within the cell.

FIG. 2B illustrates uplink signals from UEs that are asynchronous due to different propagation delay times before synchronization in the OFDM system. Referring to FIG. 2B, the ENB 200 receives uplink OFDM symbols at timings 241, 242, and 243, taking into account the propagation delay times of UE #1 and UE #2.

That is, the ENB 200 receives an uplink OFDM symbol 231 with T_pro 1 from UE #1 at the timing 242 and an uplink OFDM symbol 232 with T_pro 2 from UE #2 at the timing 243. Since the uplink OFDM symbols 231 and 232 are yet to be synchronized, the timing 241 at which the ENB 200 receives an uplink OFDM symbol and starts to decode it, the reception timing 242 of the uplink OFDM symbol 231, and the reception timing 243 of the uplink OFDM symbol 232 are different. In this state, the uplink OFDM symbols 231 and 232 are not mutually orthogonal, thus interfering each other. As a consequence, the asynchronous uplink OFDM symbol reception timings make it impossible for the ENB 200 to successfully decode the uplink OFDM symbols 231 and 232 received from UE #1 and UE #2.

Uplink timing synchronization is the process of aligning the timings 241, 242 and 243 to one another in the illustrated case of FIG. 2B. As illustrated in FIG. 2C, a start timing 251 at which the ENB 200 receives an uplink OFDM symbol and starts to decode it, a reception timing 252 of an uplink OFDM symbol from UE #1, and a reception timing 253 of an uplink OFDM symbol from UE #2 are synchronized. As a result, orthogonality can be maintained between the uplink OFDM symbols from UE #1 and UE #2 and the ENB 200 can successfully decode the uplink OFDM symbols.

However, although technologies for synchronizing uplink timings during handover have been discussed, they are not specified yet.

Meanwhile, when a UE completes a handover from a source cell to a target cell, radio resources should be allocated to the UE so that the UE can transmit a Handover Confirm message indicating the handover completion to the target cell. Yet, there is no specified method for allocating radio resources to the UE for transmission of the Handover Confirm message by an ENB of a target cell, after an ENB of a source cell transmits a Handover Command message to the UE.

IPWIRELESS: "Contention-free Intra-LTE handover", 3GPP DRAFT; R2-070646, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070209, 9 February 2007 (2007-02-09) relates to contention free Intra-LE handover wherein options are considered with respect to how UE sends initial UL transmission in a target cell.

MOTOROLA: "Contention-free Intra-LTE Handover", 3GPP DRAFT; R2-070730-NON_CONT_HANDOFF_V01, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070209, 9 February 2007 (2007-02-09) relates to an intra-LTE handover in a synchronized network. After receiving the UE RAN context from the source eNodeB, the target eNodeB allocates a C-RNTI and assigns resources on UL-SCH. The source eNodeB conveys this information to the UE via a Handover Command message. After receiving the Handover command, the UE detaches from the old cell and synchronies to the new cell.

### SUMMARY OF THE INVENTION

The present invention is defined by the accompanying independent claims. Implementation aspects of the invention, also known as embodiments, are defined by the dependent claims.

An aspect of the present invention provides a handover method and apparatus for minimizing radio resource consumption for a UE and reducing an interruption time during a handover when uplink timing synchronization is not needed during the handover in a wireless communication system, and a system thereof.

In accordance with an aspect of the present invention, there is provided a handover method of a BS for supporting a handover of an MS moving from a source cell to a target cell in a wireless communication system, in which Scheduling Request/Channel Quality Information (SR/CQI) transmission resources are allocated to the MS, an SR/CQI being periodically transmitted from the MS to the target cell, a determination is made whether control information has been received from the MS using the allocated SR/CQI transmission resources, and radio resources are allocated to the MS, for transmission of a handover confirm message from the MS, upon receipt of the control information from the MS.

In accordance with another aspect of the present invention, there is provided a BS for supporting a handover of an MS moving from a source cell to a target cell in a wireless communication system, in which a transceiver transmits and receives data wirelessly to and from the MS, a message generator generates information about SR/CQI transmission resources, an SR/CQI being periodically transmitted from the MS to the target cell, a scheduler allocates the SR/CQI transmission resources and radio resources for transmission of a handover confirm message, and when the SR/CQI transmission resources are allocated to the MS and control information is received using the SR/CQI transmission resources from the MS, a controller controls the message generator and the scheduler so that the radio resources are allocated to the MS, and provides overall control to the message generator.

In accordance with a further aspect of the present invention, there is provided a handover method of an MS moving from a source cell to a target cell in a wireless communication system, in which a message including information about SR/CQI transmission resources is received from a BS of the source cell, an SR/CQI being periodically transmitted from the MS to a BS of the target cell, control information is transmitted to the BS of the target cell according to the information about the SR/CQI transmission resources, and radio resources are allocated from the BS of the target cell, for transmission of a handover confirm message.

In accordance with still another aspect of the present invention, there is provided an MS for performing a handover in a wireless communication system, in which a transceiver transmits and receives data wirelessly to and from a BS, a message interpreter interprets information about SR/CQI transmission resources, an SR/CQI being periodically transmitted from the MS to the BS, a control information generator generates control information according to the information about the SR/CQI transmission resources, and a resource manager receives an interpretation result of the information about the SR/CQI transmission resources from the message interpreter, controls the transceiver to transmit the control information to the BS, and is allocated radio resources for transmission of a handover confirm message from the BS receiving the control information.

### BRIEF DESCRIPTION OF THE DRAWINGS

The above and other aspects, features and advantages of the present invention will be more apparent from the following detailed description taken in conjunction with the accompanying drawings, in which:
- FIG. 1: illustrates the configuration of a conventional an Evolved UMTS mobile communication system;
- FIG. 2A: illustrates different propagation delay times in a conventional OFDM system;
- FIG. 2B: illustrates uplink signals from UEs that are asynchronous due to different propagation delay times, before synchronization in the OFDM system;
- FIG. 2C: illustrates uplink signals from UEs that are asynchronous due to different propagation delay times, after synchronization in the OFDM system;
- FIG. 3: is a diagram illustrating a signal flow for a handover procedure in a wireless communication system according to a first embodiment of the present invention;
- FIG. 4: is a diagram illustrating a signal flow for a handover procedure in a wireless communication system according to a second embodiment of the present invention;
- FIG. 5: is a flowchart illustrating an operation of an ENB for supporting a handover in a wireless communication system according to the present invention;
- FIG. 6: is a flowchart illustrating an operation of a UE for performing a handover in a wireless communication system according to the present invention;
- FIG. 7: is a block diagram of an ENB in a wireless communication system according to the present invention; and
- FIG. 8: is a block diagram of a UE in a wireless communication system according to the present invention.

Throughout the drawings, the same drawing reference numerals will be understood to refer to the same elements, features and structures.

### DETAILED DESCRIPTION OF THE PREFERRED EMBODIMENTS

The matters defined in the description such as a detailed construction and elements are provided to assist in a comprehensive understanding of preferred embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness.

The present invention provides a method for allocating resources to a User Equipment (UE), in which the UE will transmit a Handover Confirm message to a target cell during a handover in a wireless communication system. The resource allocation method is considered in two ways.

In accordance with a first embodiment of the present invention, during a handover using uplink timing synchronization to a target cell, an Evolved Node B (ENB) of the target cell transmits resource allocation information needed for transmission of a Handover Confirm message from a UE to the ENB in an uplink timing sync information message.

In accordance with a second embodiment of the present invention, during a handover that does not use uplink timing synchronization to a target cell, a UE requests an ENB of the target cell to allocate resources for transmission of a Handover Confirm message using Scheduling Request/Channel Quality Information (SR/CQI) transmission resources, and the ENB correspondingly allocates radio resources for the Handover Confirm message to the UE.

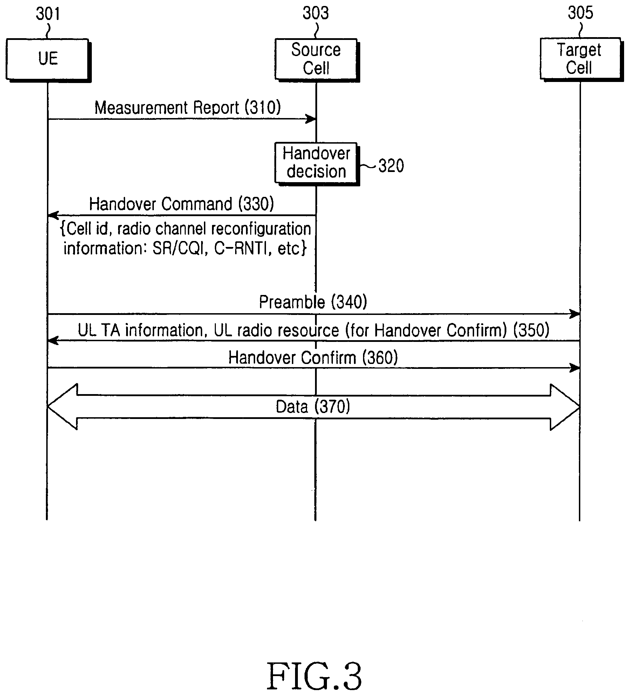

FIG. 3 is a diagram illustrating a signal flow for a handover procedure in a wireless communication system according to the first embodiment of the present invention. The handover procedure is about a case where a target cell and a source cell belong to different ENBs and uplink timings are different in the source cell and the target cell.

Referring to FIG. 3, a UE 301 transmits a Measurement Report to a source cell 303 in step 310. The UE 301 measures the channel statuses of the source cell 303 and neighbor cells according to a condition set by an ENB of the source cell 303, for example, upon generation of a particular event or periodically, and reports the channel status measurements to the source cell 303 by the Measurement Report.

The ENB of the source cell 303 determines whether to perform a handover for the UE 301 based on the channel status measurements. When deciding on a handover to a target cell 305 for the UE 301 in step 320, the ENB of the source cell 303 transmits a Handover Command message to the UE 301, requesting the handover to the target cell 305 in step 330. The Handover Command message includes a cell identifier (ID) of the target cell 305 and radio channel reconfiguration information that the UE 301 will use in the target cell 305. The radio channel reconfiguration information includes radio resource information for transmission of an SR/CQI from the UE 301 to the target cell 305 and a Cell Radio Network Temporary Identifier (C-RNTI) of the UE 301 for use in the target cell 305. The SR is a control signal by which the UE 301 requests radio resource allocation for transmission of a buffer status report to the ENB and the CQI is a signal by which the UE 301 reports the status and characteristics of a downlink channel to the ENB so that the ENB can efficiently allocate downlink radio resources to the UE 301. For example, a downlink Modulation and Coding Scheme (MCS) level is set based on the CQI. Furthermore, according to the present invention, the CQI may include sounding information as a uplink reference signal, the UE 301 periodically generates and transmits the sounding information together with the SR/CQI through whole frequency bands or a predetermined frequency band when the CQI including the sounding information, and then the ENB estimates uplink channel status according to the sounding information received from the UE and efficiently allocates uplink transmission resources to the UE based on the estimation result of the uplink channel status.

Upon receipt of the Handover Command message, the UE 301 transmits a preamble being a code sequence in radio resources at a particular timing to the target cell 305 in order to synchronize uplink timing to the target cell 305 in step 340. Since the preamble is preset between the UE 301 and the target cell 305, an ENB of the target cell 305 can compute the difference between the uplink timing of the ENB of the target cell 305 and the uplink timing of the UE 301 using the preamble. The ENB of the target cell 305 notifies the UE 301 of the timing difference, i.e. Timing Advance (TA) in step 350. The UE 301 corrects its uplink timing based on the TA and transmits a Handover Confirm message to the ENB of the target cell 305, notifying that the handover has been completed in step 360. Notably, the ENB of the target cell 305 transmits to the UE 301 information about uplink radio resources for the Handover Confirm message along with the uplink TA in step 350. In step 370, the UE 301 transmits and receives data to and from the target cell 305.

As described above, during a handover needing uplink timing synchronization to a target cell, an ENB of the target cell transmits to a UE resource allocation information needed for transmission of a Handover Confirm message from the UE to the target cell by a message carrying an uplink TA. Then the UE successfully receives a Handover Command message, corrects its uplink timing, and transmits the Handover Confirm message to the ENB of the target cell.

On the other hand, if the handover does not need the uplink timing synchronization to the target cell, the ENB of the target cell is not aware when to allocate radio resources to the UE for transmission of the Handover Confirm message because the ENB of the target cell does not receive control information such as a preamble from the UE.

To avert this problem, the ENB of the target cell can reserve radio resources for transmission of the Handover Confirm message with a sufficient margin for the UE. A shortcoming with this resource reservation is an increased interruption time during the handover. In the case where the ENB of the target cell reserves a plurality of radio resources for transmission of the Handover Confirm message to reduce the interruption time, if the radio resources are not used, they are actually wasted since that they are not negligibly small.

Accordingly, the second embodiment of the present invention provides a method for minimizing the amount of radio resources that a target cell reserves for transmission of a Handover Confirm message and reducing a handover interruption time, during a handover using no uplink timing synchronization to the target cell.

For this purpose, the UE requests allocation of radio resources for transmission of the Handover Confirm message to the ENB of the target cell using resources set for transmission of an SR/CQI included in radio channel information reconfigured for use in the target cell, rather than the ENB of the target cell allocates radio resources separately to the UE, for transmission of the Handover Confirm message. The SR/CQI transmission resources are far smaller in amount than the transmission resources of the Handover Confirm message. Hence, even though a plurality of SR/CQI transmission resources are reserved to reduce a handover interruption time, the radio resource waste is not much.

When SR/CQI transmission resources are not frequently allocated under a certain communication environment, that is, the allocation period of SR/CQI transmission resources is long, the SR/CQI transmission resources may not be utilized for the purpose of requesting allocation of transmission resources of the Handover Confirm message. This is because infrequently allocated SR/CQI transmission resources are not sufficient to reduce the handover interruption time. In this case, the present invention sets the allocation period of SR/CQI transmission resources in two steps. In step 1, the allocation period of SR/CQI transmission resources is set to be short to reduce the handover interruption time, and in step 2, the allocation period is set to be relatively long. The reason for setting the allocation period of SR/CQI transmission resources in two steps is that an appropriate allocation period of SR/CQI transmission resources can be different depending on whether SR/CQI transmission resources serve the purpose of requesting transmission resources of the Handover Confirm message or the purpose of a normal service in the target cell after the handover. A 2-step setting example of the allocation period of SR/CQI transmission resources according to the second embodiment of the present invention will be described below.

1^{st}-step SR/CQI transmission resources are used until radio resources for transmission of a Handover Confirm message are allocated to a UE, or for a time period set according to a maximum Hybrid Automatic Repeat reQuest (HARQ) transmission number for the Handover Command message, after the UE receives a Handover Command message from a source cell. 2^{nd}-step SR/CQI transmission resources are used after the allocation of the radio resources for transmission of the Handover Confirm message.

An SR/CQI serves the purpose of requesting the allocation of the radio resources for transmission of the Handover Confirm message after the UE successfully receives the Handover Command message from the source cell in step 1. To decrease the handover interruption time, the SR/CQI transmission resources can be allocated more frequently in step 1 than in step 2. It can be further contemplated that SR/CQI transmission resources of step 1 are used until the UE successfully transmits the Handover Confirm message to the target cell after successfully receiving the Handover Command message from the source cell in step 1 and then SR/CQI transmission resources of step 2 are used.

Upon successful receipt of the Handover Command message from the source cell, the UE transmits corresponding control information in the 1^{st}-step SR/CQI transmission resources. Upon receipt of the control information in the 1^{st}-step SR/CQI resources after allocating the 1^{st}-step SR/CQI resources, a network node such as an ENB allocates radio resources to the UE for transmission of a Handover Confirm message to the target cell. If the ENB of the target cell and the ENB of the source cell are different, the ENB of the target cell allocates the SR/CQI transmission resources. In this case, the ENB of the target cell transmits parameters associated with the allocation of the SR/CQI transmission resources to the ENB of the source cell by signaling. If the same ENB manages the source cell and the target cell, the ENB transmits the Handover Command message and also allocates the SR/CQI transmission resources to the UE. The UE transmits a Handover Confirm message to the target cell in the allocated resources. Then the UE transmits corresponding control information to the target cell in the 2^{nd}-step SR/CQI transmission resources.

Now a description will be made of the second embodiment of the present invention.

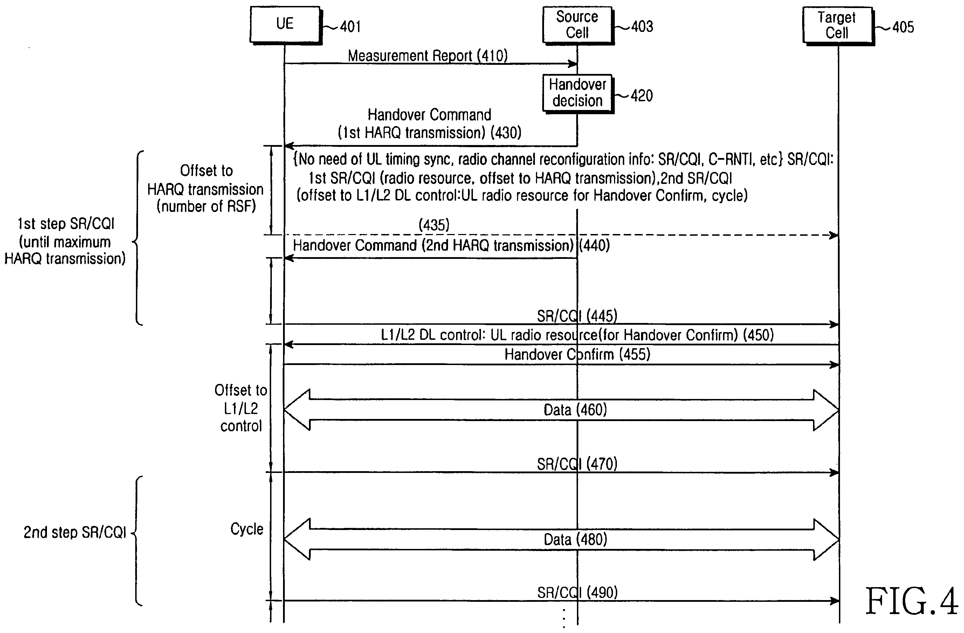

FIG. 4 is a diagram illustrating a signal flow for a handover procedure in the wireless communication system according to the second embodiment of the present invention. The handover procedure is about the case where no uplink timing synchronization to a target cell is needed.

For convenience sake, a handover requiring no uplink timing synchronization to a target cell is referred to as Uplink (UL) timing synchronized handover. The UL timing synchronized handover occurs when no uplink timing synchronization procedure is needed as the same ENB manages a source cell and a target cell, or although different ENBs manage the source cell and target cell, the target cell is sufficiently small. In the illustrated case of FIG. 4, different ENBs manage the source cell and the target cell and SR/CQI transmission resources are separately allocated in two steps. While not shown in FIG. 4, the UE may generates and transmit aforementioned sounding information together with information about SR/CQI transmission resources as with description of FIG. 3. In this case, the ENB of the target cell allocates SR/CQI/SOUNDING transmission resources to the MS in a same manner as below described allocation of SR/CQI transmission resources, an SR/CQI/SOUNDING being periodically transmitted from the UE to the target cell.

Referring to FIG. 4, a UE 401 transmits a Measurement Report to an ENB of a source cell 403 in step 410. The UE 401 measures the channel statuses of the source cell 403 and neighbor cells upon generation of a particular event or periodically, and reports the channel status measurements to the ENB of the source cell 403 by the Measurement Report. The ENB of the source cell 403 determines whether to perform a handover for the UE 401 based on the channel status measurements.

When deciding on a handover for the UE 401 in step 420, the ENB of the source cell 403 exchanges handover information with an ENB of the target cell 405 (while not shown). Herein, the ENB of the target cell 405 reconfigures radio channel information that the UE 401 will use in the target cell 405 and signals the radio channel reconfiguration information to the ENB of the source cell 403. The ENB of the target cell 405 separately reserves SR/CQI transmission resources that the UE 401 will use in the target cell 405 in two steps, and signals parameters associated with the SR/CQI transmission resources to the ENB of the source cell 403. The 1st-step SR/CQI transmission resources are used until a time when the UE 401 requests radio resources for transmission of a Handover Confirm message to the ENB of the target cell 405, until a time when the radio resources are allocated by the ENB of the target cell, or during a time period set according to a maximum HARQ transmission number for the Handover Command message. The 2nd-step SR/CQI transmission resources are used for a normal service after the ENB of the target cell 405 allocates the radio resources for transmission of the Handover Confirm message to the UE 401.

If SR/CQI transmission resources that the ENB of the target cell 405 reconfigures to provide a service to the UE 401 are allocated so frequently (e.g. every 5ms) that there is no problem in reducing a handover interruption time, the UE 401 can continuously use the SR/CQI transmission resources from the reception time of the Handover Command message from the ENB of the source cell 403 without the need of stepwise SR/CQI transmission resources allocation.

In step 430, the ENB of the source cell 403 transmits to the UE 401 a Handover Command message including the radio channel reconfiguration information received from the ENB of the target cell, commanding a handover to the target cell 405. The Handover Command message may include information such as 1) indicating no need of UL timing synchronization when there is no need for UL timing synchronization to the target cell 405, and 2) radio channel reconfiguration information of a UE ID for use in the target cell 405 and channel and resource information including information about SR/CQI transmission resources.

SR/CQI transmission resources separately allocated in two steps can be signaled in the radio channel reconfiguration info in the following two ways, e.g. signaling method 1 and signaling method 2. While signaling method 1 is used in FIG. 4, signaling method 1 is a mere example and those skilled in the art should clearly understand that the signaling of SR/CQI transmission resources is not limited to the signaling method 1.

Signaling method 1 includes first and second steps for SR/CQI transmission resource information. The first step of signaling method 1 transmits radio resource information including information about a scrambling code and a channel allocated to a UE. The second step of signaling method 1 transmits transmission timing information which is an offset to HARQ transmission. The transmission timing information can be expressed as a number of subframes.

Signaling method 2 also includes first and second steps for SR/CQI transmission resource information. The first step of signaling method 2 transmits radio resource information including information about a scrambling code and a channel allocated to a UE in the same manner as in step 1 of signaling method 1. The second step of signaling method 2 transmits transmission timing information. The transmission timing information includes i) start timing which is a Radio Frame Number (RFN) and/or a Radio Sub-Frame Number (RSFN), or a transmission cycle that can be expressed as the number of subframes; and ii) the application duration of the 1^{st}-step SR/CQI transmission resources that is an RFN and an RSFN, or the number of subframes. The second step of signaling method 2 transmits radio resource information transmits radio resource information including information about a scrambling code and a channel allocated to a UE in the same manner as in step 1 of signaling method 1. The second step of signaling method 2 also transmits transmission timing information including start timing that is an RFN and an RSFN, or a transmission cycle.

Referring to FIG. 4 again, the ENB of the source cell 403 transmits the Handover Command message according to an HARQ scheme in steps 430 and 440. Steps 430 and 440 are about first and second HARQ transmissions of the Handover Command message. While the UE 401 successfully receives the Handover Command message at a second HARQ transmission without Cyclic Redundancy Check (CRC) errors and thus the Handover Command message is transmitted twice in FIG. 4, the ENB of the source cell 403 can transmit the Handover Command message up to a maximum HARQ transmission number of times to the UE 401 until the UE 401 successfully receives it. The 1^{st}-step SR/CQI transmission resources can be reserved up to the maximum HARQ transmission number of times after an offset to each HARQ transmission.

In the Handover Command messages transmitted in steps 430 and 440, information about the 1^{st}-step SR/CQI transmission resources is included. The 1^{st}-step SR/CQI transmission resources are reserved for allocation at a timing corresponding to an offset to each HARQ transmission, expressed as the number of radio subframes. Since the UE 401 does not successfully receive the Handover Command message at the first HARQ transmission in step 430 in FIG. 4, SR/CQI transmission resources that are reserved for allocation at a timing corresponding to the offset to the first HARQ transmission are unused, thus causing resource waste in step 435. As the UE 401 successfully receives the Handover Command message at the second HARQ transmission in step 440, the UE 401 acquires information about 2-step SR/CQI transmission resources and transmits corresponding control information in radio resources allocated at a timing corresponding to the offset to the second HARQ transmission according to the 1^{st}-step SR/CQI transmission resource information in step 445. The control information can be a normal SR/CQI or the control information may include a request for resource allocation for transmission of a Handover Confirm message.

Upon receipt of corresponding control information from the UE 401 during monitoring the 1^{st}-SR/CQI transmission resources in step 445, the ENB of the target cell 405 allocates radio resources for transmission of the Handover Confirm message to the UE 401 on an L1/L2 downlink control channel in step 450. That is, since the ENB of the target cell 405 receives the control information in the 1^{st}-step SR/CQI transmission resources from the UE 401, the ENB considers that the control information is a request for allocation of radio resources for the Handover Confirm message. The resource allocation request is recognized implicitly by an agreement between the ENB of the target cell 405 and the UE 401 or explicitly by signaling between them. The ENB of the target cell 405 can set an MCS level for the Handover Confirm message based on a CQI received from the UE 401 in step 455. When the radio resources for transmission of the Handover Confirm message are allocated by the L1/L2 downlink control channel in step 450, the UE 401 transmits the Handover Confirm message to the ENB of the target cell 405 in the allocated radio resources. Then the UE 401 transmits a 2^{nd}-step SR/CQI according to the 2^{nd}-step SR/CQI transmission resource information after an offset to the L1/L2 control information transmission. That is, the UE 401 transmits corresponding control information in radio resources allocated at a 2^{nd}-step SR/CQI resource allocation timing in step 470. Then the UE 401 transmits corresponding control information to the ENB of the target cell 405 in every 2^{nd}-step SR/CQI transmission cycle expressed as the number of subframes in step 490.

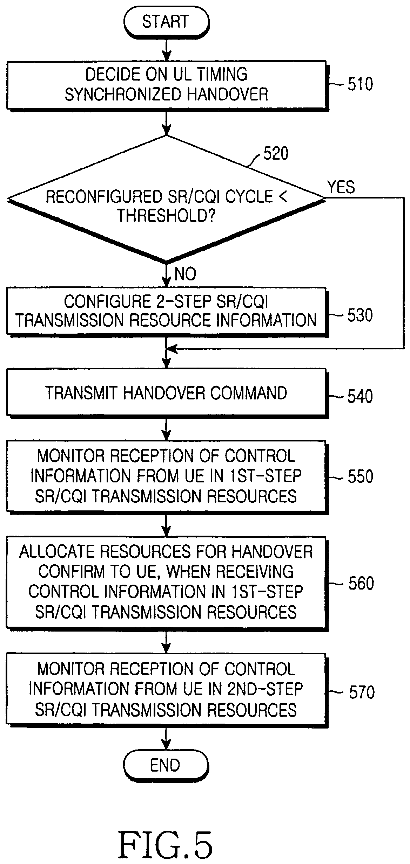

FIG. 5 is a flowchart illustrating an operation of an ENB for supporting a handover in the wireless communication system according to the present invention. As with FIG. 4, it is assumed that different ENBs manage a source cell and a target cell. While steps 510 and 540 take place in the ENB of the source cell and the other steps take place in the ENB of the target cell in the illustrated case of FIG. 5, those skilled in the art should clearly understand that the operation of FIG. 5 is also applicable to the case where the same ENB manages both the source cell and the target cell.

Referring to FIG. 5, when the ENB of the source cell determines that the UE needs a handover based on a Measurement Report and determines that the handover is a UL timing synchronized handover in step 510, the ENB exchanges handover information with the ENB of the target cell. In step 520, the ENB of the target cell determines whether the allocation cycle of SR/CQI transmission resources that will be reconfigured to provide a service to the UE is short enough to reduce a handover interruption time, that is, whether the allocation cycle of the SR/CQI transmission resources is shorter than a particular threshold that reduces the handover interruption time sufficiently. Because signaling is performed for the handover of the UE between the ENBs of the source cell and the target cell, the determination about the allocation cycle of the SR/CQI transmission resources can be made in the ENB of the source cell.

If the allocation cycle of the SR/CQI transmission resources is shorter than the threshold, the ENB of the source cell transmits information about the reconfigured SR/CQI transmission resources in a Handover Command message to the UE in step 540. On the other hand, if the allocation cycle of the SR/CQI transmission resources is equal to or greater than the threshold, the ENB of the target cell reconfigures 2-step SR/CQI transmission resource information and signals the 2-step SR/CQI transmission resource information to the ENB of the source cell in step 530. Then, the ENB of the source cell transmits the reconfigured 2-step SR/CQI transmission resource information to the UE in a Handover Command message in step 540.

In step 550, the ENB of the target cell determines whether corresponding control information has been received from the UE by monitoring 1^{st}-step SR/CQI transmission resources. Upon receipt of the corresponding control information in the 1^{st}-step SR/CQI transmission resources, the ENB of the target cell allocates radio resources for transmission of a Handover Confirm message to the UE, considering that the reception of a 1 ^{st}-step SR/CQI is a request for radio resource allocation for the Handover Confirm message in step 560. Then the UE transmits the Handover Confirm message to the ENB of the target cell in the allocated radio resources. In step 570, the ENB of the target cell determines whether corresponding information has been received from the UE in 2^{nd}-step SR/CQI transmission resources. When the 2^{nd}-step SR/CQI transmission resources are used, the rest of as many 1-^{st} step SR/CQI radio resources as a maximum HARQ transmission number that are reserved by the Handover Command message can be released.

It can be further contemplated as another example of the present invention that despite the use of the 2^{nd}-step SR/CQI transmission resources, the rest of as many 1-^{st} step SR/CQI radio resources as a maximum HARQ transmission number that are reserved by the Handover Command message are still be kept reserved. Steps 550, 560 and 570 are performed when the SR/CQI transmission resources are allocated in two steps. If the allocation cycle of the SR/CQI transmission resources is too short to be separated in two steps, the ENB of the target cell determines that a first received control information (i.e. SR/CQI) received from the UE is a request for resource allocation for the Handover Confirm message. The ENB of the target cell determines that control information (i.e. SR/CQI) received after receiving the Handover Confirm message from the UE is for a normal service.

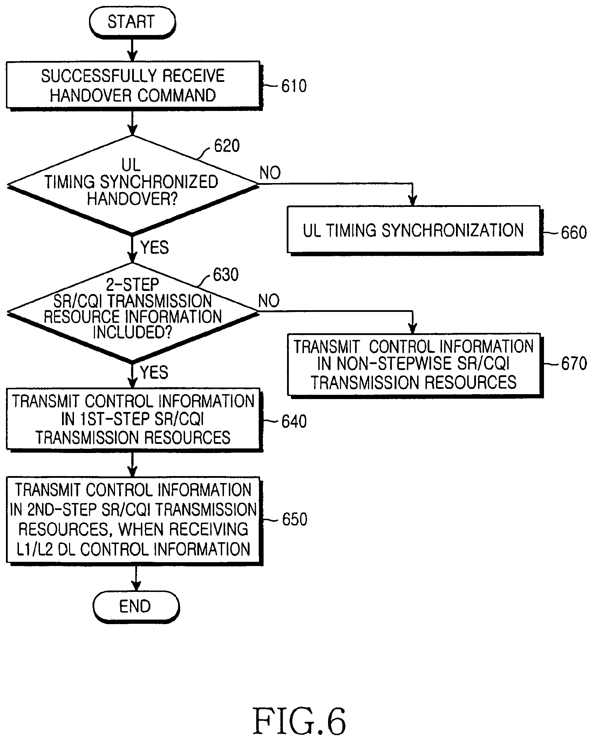

FIG. 6 shows an operation of a UE for performing a handover in the wireless communication system according to the present invention. As with FIG. 4, different ENBs manage a source cell and a target cell in FIG. 6.

Referring to FIG. 6, upon successful reception of a Handover Command message from an ENB of a source cell in step 610, the UE determines whether the handover needed uplink timing synchronized to a target cell in step 620. For example, if the Handover Command message has "No need of UL timing sync" as in step 430 of FIG. 4, the UE determines that the handover is a UL timing synchronized handover. If the handover is a UL timing synchronized handover in step 620, the UE determines whether the Handover Command message includes 2-step SR/CQI transmission resource information in step 630. In the presence of the 2-step SR/CQI transmission resource information, the UE transmits corresponding control information to an ENB of the target cell using 1^{st}-step SR/CQI transmission resource information in step 640. Upon receipt of L1/L2 downlink control information that allocates radio resources for a Handover Confirm message from the ENB of the target cell, the UE releases 1^{st}-step SR/CQI transmission resources and transmits corresponding control information in 2^{nd}-step SR/CQI transmission resources to the ENB of the target cell in step 650.

Meanwhile, if the handover requires uplink timing synchronization in step 620, the UE performs an uplink timing synchronization procedure in step 660. In this case, the Handover Confirm message is transmitted to the ENB of the target cell in the procedure of FIG. 3. If the 2-step SR/CQI transmission resource information is not included in the Handover Command message in step 630, the UE transmits corresponding control information to the ENB of the target cell using SR/CQI transmission resources indicated in a non-stepwise manner in step 670.

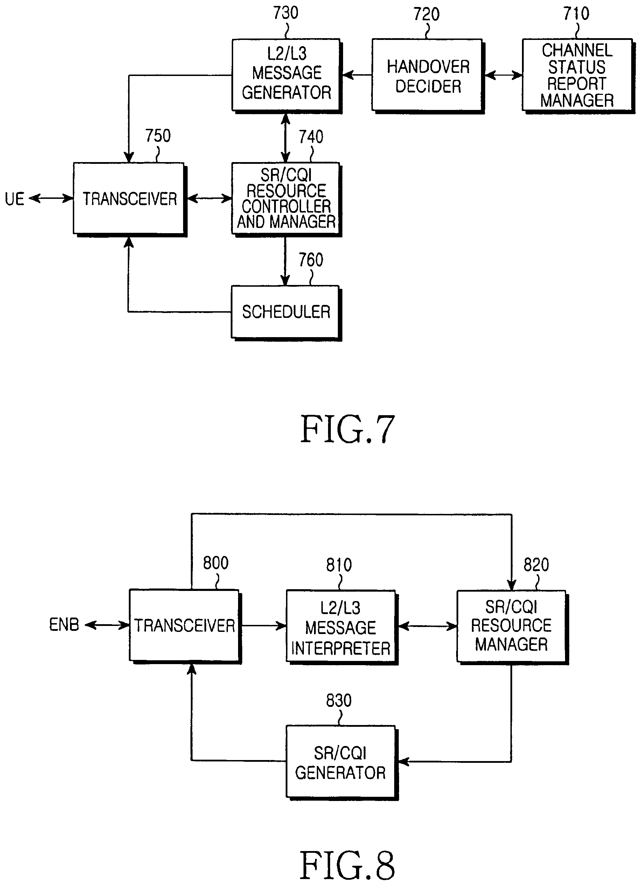

FIG. 7 shows an ENB in a wireless communication system according to the present invention. The ENB operates in the method illustrated in FIG. 5.

Referring to FIG. 7, a channel status report manager 710 manages basic information by which to decide about a handover of a UE, such as a channel status measurement report received from the UE. A handover decider 720 determines whether to perform a handover for the UE based on information received from the channel status report manager 710. An L2/L3 message generator 730 generates a Handover Command message according to a signal indicating whether the handover is determined for the UE, received from the handover decider 720. It can configure 2-step SR/CQI transmission resource information according to the allocation period of SR/CQI resources reconfigured in a target cell under the control of an SR/CQI resource controller/manager 740 and output the SR/CQI transmission resource information in the Handover Command message. A transceiver 750 transmits the Handover Command message to the UE.

The SR/CQI resource controller/manager 740 controls SR/CQI transmission resources. For reserved SR/CQI transmission resources of the target cell, the SR/CQI resource controller/manager 740 controls a scheduler 760 not to use the same resources for any other purpose. If control information, i.e. an SR/CQI is received in 1^{st}-step SR/CQI transmission resources from the UE through the transceiver 750, the SR/CQI resource controller/manager 740 controls the scheduler 760 to allocate radio resources for transmission of a Handover Confirm message to the UE. Then the transceiver 750 receives corresponding control information from the UE in 2^{nd}-step SR/CQI transmission resources. While not shown in FIG. 7, the ENB includes a communication interface for signaling to and from an ENB of a neighbor cell.

FIG. 8 shows a UE in a wireless communication system according to the present invention. The UE operates in the procedure of FIG. 6.

Referring to FIG. 8, a transceiver 800 receives a Handover Command message including SR/CQI transmission resource information of a target cell from an ENB of a source cell. An L2/L3 message interpreter 810 detects the SR/CQI transmission resource information by interpreting the Handover Command message received from the transceiver 800. An SR/CQI resource manager 820 manages the SR/CQI transmission resource information received from the L2/L3 message interpreter 730. When the transceiver 800 receives 2-step SR/CQI transmission resource information, SR/CQI generator 830 generates corresponding information and transmits the control information to an ENB of the target cell through the transceiver 800 at a corresponding timing in corresponding radio resources. If the transceiver 810 then receives L1/L2 downlink control information indicating allocation of radio resources for a Handover Confirm message from the ENB of the target cell, the Handover Confirm message is transmitted to the ENB of the target cell in allocated radio resources. Subsequently, the SR/CQI resource manager 820 releases 1^{st}-step SR/CQI transmission resources and transmits corresponding control information in 2^{nd}-step SR/CQI transmission resources through the transceiver 800.

As is apparent from the above description, during a UL timing synchronized handover, a UE can request resource allocation for a Handover Confirm message using SR/CQI transmission resources. To do so, the present invention provides a specified resource allocation method and signaling procedure of an ENB. Also, since 2-step SR/CQI transmission resource information is configured according to the allocation cycle of the SR/CQI transmission resources, the amount of radio resources that a target cell reserves for transmission of the Handover Confirm message are minimized and a handover interruption time is reduced.

While the invention has been shown and described with reference to certain preferred embodiments of the present invention thereof, it will be understood by those skilled in the art that various changes in form and details may be made therein without departing from the scope of the present invention as defined by the appended claims and their equivalents.

## Claims

1. A handover method of **a base station, BS,** located at a target cell (405) for supporting a handover of a mobile station, MS, (401) moving from a source cell (403) to the target cell (405) in a wireless communication system, the method comprising:
allocating scheduling request, SR, and channel quality information, CQI, transmission resources for the handover to the MS;
transmitting, to a BS located at the source cell, information related to the SR and CQI resources;
receiving (445) from the MS, a resource allocating request for a handover confirm message;
transmitting (450), to the MS, information indicating a radio resource allocated in a response to the resource allocating request;
receiving (455), from the MS, the handover confirm message indicating a completion of the handover, the handover confirm message being transmitted from the MS by using the radio resource
wherein, the handover does not need procedures associated with uplink timing synchronization to the target cell.

2. The handover method of claim 1, wherein the information related to the SR and CQI resources is included in a handover command message transmitted to the MS from the BS located at the source cell.

3. The handover method of claim 2, wherein the handover command message is transmitted to the MS a maximum hybrid automatic repeat request, HARQ, number of or fewer times.

4. The handover method of claim 1, wherein the allocating the SR and CQI transmission resources further comprises:
comparing an allocation cycle of the at least one of the SR and CQI transmission resources with a particular threshold; and
adjusting the allocation cycle of the at least one of the SR and CQI transmission resources when the allocation cycle of the at least one of the SR and CQI transmission resources is greater than the threshold.

5. The handover method of claim 4, wherein the adjusting the allocation cycle further comprises:
reconfiguring the information about the at least one of the SR and CQI transmission resources into information of a plurality of steps according to the allocation cycle, wherein at least one of the reconfigured information about the at least one of the SR and CQI transmission resources is set so that the allocation cycle of the at least one of the SR and CQI transmission resources is less than the threshold.

6. The handover method of claim 4, wherein the threshold is set taking into account of a handover interruption time.

7. The handover method of claim 5, wherein the reconfigured information about the at least one of the SR and CQI transmission resources is included in a handover command message transmitted to the MS, and information about first-step SR/CQI transmission resources included in the reconfigured information about the at least one of the SR and CQI transmission resources is used for the MS to request resource allocation for transmission of the handover confirm message to the target cell after the MS successfully receives the handover command message from the source cell.

8. The handover method of claim 7, wherein the handover command message is transmitted a maximum HARQ transmission number of or fewer times, further comprising releasing allocation of unused resources in the first-step SR/CQI transmission resources when there remain the unused resources after the control information is received from the UE according to the information about the first-step SR/CQI transmission resources.

9. A base station, BS, located at a target cell (405) for supporting a handover of a mobile station, MS, (401) moving from a source cell (403) to the target cell in a wireless communication system, the BS comprising:
a controller configured for allocating scheduling request, SR, and channel quality information, CQI, transmission resources for the handover to the MS; and
a transceiver configured for transmitting, to a BS located at the source cell, information related to the SR and CQI resources, receiving (445), from the MS, a resource allocating request for a handover confirm message, transmitting (450), to the MS, information indicating a radio resource allocated in a response to the resource allocating request, and receiving (455) from the MS, a handover confirm message indicating a completion of the handover, the handover confirm message being transmitted from the MS by using the radio resource,
wherein, the handover does not need procedures associated with uplink timing synchronization to the target cell.

10. The BS of claim 9, wherein the information related to the SR and CQI resources are included in a handover command message transmitted to the MS from the BS located at the source cell.

11. The BS of claim 10, wherein the handover command message is transmitted to the MS a maximum hybrid automatic repeat request, HARQ, number of or fewer times.

12. The BS of claim 9, wherein the controller is further configured to compare an allocation cycle of the at least one of the SR and CQI transmission resources with a particular threshold, and adjust the allocation cycle of the at least one of the SR and CQI transmission resources, if the allocation cycle of the at least one of the SR and CQI transmission resources is greater than the threshold.

13. The BS of claim 12, wherein when the allocation cycle of the SR/CQI transmission resources is adjusted, the controller is further configured to reconfigure the information about the at least one of the SR and CQI transmission resources into information of a plurality of steps according to the allocation cycle, wherein at least one of the reconfigured information about the at least one of the SR and CQI transmission resources is set so that the allocation cycle of the at least one of the SR and CQI transmission resources is less than the threshold.

14. The BS of claim 12, wherein the controller sets the threshold taking into account of a handover interruption time.

15. The BS of claim 13, wherein the reconfigured information about the at least one of the SR and CQI transmission resources is included in a handover command message transmitted to the MS, and information about first-step SR/CQI transmission resources included in the reconfigured at least one of the SR and CQI information about the transmission resources is used for the MS to request resource allocation for transmission of the handover confirm message to the target cell after the MS successfully receives the handover command message from the source cell.

16. The BS of claim 15, wherein the handover command message is transmitted to the MS a maximum HARQ transmission number of or fewer times, and the controller is further configured to release allocation of unused resources in the first-step SR/CQI transmission resources, when there remain the unused resources after the control information is received from the UE according to information about the first-step SR/CQI transmission resources.

17. A handover method of a mobile station, MS, (401) moving from a source cell (403) to a target cell (405) in a wireless communication system, the method comprising:
receiving (430), from a base station located at the source cell (403), information related to scheduling request, SR, and channel quality information, CQI, transmission resources for the handover allocated to the MS by a base station, BS, located at the target cell (405);
transmitting (445), to the BS located at the target cell, a resource allocating request for a handover confirm message;
receiving (450), from the BS located at the target cell, information indicating a radio resource allocated in a response to the resource allocating request; and
transmitting (455), to the BS located at the target cell, a handover confirm message indicating a completion of the handover using the radio resource;
wherein the handover does not need procedures associated with uplink timing synchronization to the target cell.

18. The handover method of claim 17, wherein the information related to the SR and CQI resources, is included in a handover command message received from the BS located at the source cell.

19. The handover method of claim 17, wherein the information is reconfigured into information of a plurality of steps according to an allocation cycle of the at least one of the SR and CQI transmission resources, at least one of the reconfigured information about the at least one of the SR and CQI transmission resources is set so that the allocation cycle of the SR/CQI transmission resources of the at least one step is less than a particular threshold, and the threshold is set taking into account of a handover interruption time.

20. The handover method of claim 17, further comprising:
determining whether the information about the at least one of the SR and CQI transmission resources includes information of a plurality of steps according to an allocation cycle of the at least one of the SR and CQI transmission resources; and
transmitting the resource allocating request for transmission of the handover confirm message to the BS of the target cell using information about first-step SR/CQI transmission resources in the information of a plurality of steps.

21. A mobile station, MS, (401) for performing a handover from a source cell (403) to a target cell (405) in a wireless communication system, the MS comprising:
a transceiver configured for receiving, from a base station located at the source cell (403), information related to scheduling request, SR, and channel quality information, CQI, transmission resources for the handover allocated to the MS by a base station, BS, located at the target cell (405), transmitting (445), to the BS located at the target cell, a resource allocating request for a handover confirm message, receiving (450), from the BS located at the target cell, information indicating a radio resource allocated in a response to the resource allocating request, and transmitting (455), to the BS located at the target cell, a handover confirm message indicating completion of the handover using the radio resource, and
a controller configured for recognizing the allocated radio resources,
wherein the handover does not need procedures associated with uplink timing synchronization to the target cell

22. The MS of claim 21, wherein the information related to the SR and CQI resources, is included in a handover command message received from the BS located at the source cell.

23. The MS of claim 21, wherein the information about the SR/CQI transmission resources is reconfigured into information of a plurality of steps according to an allocation cycle of the at least one of the SR and CQI transmission resources in the BS, at least one of the reconfigured information about the at least one of the SR and CQI transmission resources is set so that the allocation cycle of at least one of the SR and CQI transmission resources of the at least one step is less than a particular threshold, and the threshold is set taking into account of a handover interruption time.

## Patentansprüche

1. Übergabeverfahren einer Basisstation, BS, die an einer Zielzelle (405) gelegen ist, zum Unterstützen einer Übergabe einer Mobilstation, MS, (401), die sich von einer Quellenzelle (403) zu der Zielzelle (405) bewegt, in einem drahtlosen Kommunikationssystem, das Verfahren umfassend:
Zuordnen von Terminanfrage-, SR-, und Kanalqualitätsinformations-, CQI-, Senderessourcen für die Übergabe zu der MS;
Senden, an eine BS, die an der Quellenzelle gelegen ist, von Informationen, die sich auf die SR- und CQI-Ressourcen beziehen;
Empfangen (445) von der MS einer Ressourcenzuordnungsanfrage für eine Übergabebestätigungsnachricht;
Senden (450) von Informationen, die eine in einer Antwort auf die Ressourcenzuordnungsanfrage zugeordnete Funkressource angeben, an die MS;
Empfangen (455) der Übergabebestätigungsnachricht, die eine Beendigung der Übergabe angibt, von der MS, wobei die Übergabebestätigungsnachricht von der MS unter Verwendung der Funkressource gesendet wird,
wobei die Übergabe keine Prozeduren erfordert, die mit einer Uplink-Zeitsynchronisierung zur Zielzelle verknüpft sind.

2. Übergabeverfahren nach Anspruch 1, wobei die Informationen, die sich auf die SR- und CQI-Ressourcen beziehen, in einer Übergabebefehlsnachricht enthalten sind, die von der BS, die an der Quellenzelle gelegen ist, an die MS gesendet wird.

3. Übergabeverfahren nach Anspruch 2, wobei die Übergabebefehlsnachricht mit einer Anzahl einer maximalen hybriden automatischen Wiederholungsanfrage, HARQ, oder weniger oft an die MS gesendet wird.

4. Übergabeverfahren nach Anspruch 1, wobei die Zuordnung der SR- und CQI-Senderessourcen ferner umfasst:
Vergleichen eines Zuordnungszyklus der zumindest einen der SR- und CQI-Senderessourcen mit einem bestimmten Schwellenwert; und
Einstellen des Zuordnungszyklus der zumindest einen der SR- und CQI-Senderessourcen, wenn der Zuordnungszyklus der zumindest einen der SR- und CQI-Senderessourcen größer als der Schwellenwert ist.

5. Übergabeverfahren nach Anspruch 4, wobei das Einstellen des Zuordnungszyklus ferner umfasst:
Neukonfigurieren der Informationen über die zumindest eine der SR- und CQI-Senderessourcen zu Informationen mehrerer Schritte gemäß dem Zuordnungszyklus, wobei zumindest eine der neukonfigurierten Informationen über die zumindest eine der SR- und CQI-Senderessourcen so eingestellt ist, dass der Zuordnungszyklus der zumindest einen der SR- und CQI-Senderessourcen kleiner als der Schwellenwert ist.

6. Übergabeverfahren nach Anspruch 4, wobei der Schwellenwert unter Berücksichtigung einer Übergabeunterbrechungszeit eingestellt ist.

7. Übergabeverfahren nach Anspruch 5, wobei die neukonfigurierten Informationen über die zumindest eine der SR- und CQI-Senderessourcen in einer Übergabebefehlsnachricht enthalten sind, die an die MS gesendet wird, und Informationen über SR-/CQI-Senderessourcen des ersten Schritts, die in den neukonfigurierten Informationen über die zumindest eine der SR- und CQI-Senderessourcen enthalten sind, für die MS verwendet werden, um eine Ressourcenzuordnung für eine Sendung der Übergabebestätigungsnachricht an die Zielzelle anzufordern, nachdem die MS die Übergabebefehlsnachricht erfolgreich von der Quellenzelle empfangen hat.

8. Übergabeverfahren nach Anspruch 7, wobei die Übergabebefehlsnachricht einer maximalen HARQ-Sendeanzahl oder weniger oft gesendet wird, ferner umfassend ein Freigeben einer Zuordnung unbenutzter Ressourcen in den SR-/CQI-Senderessourcen des ersten Schritts, wenn die unbenutzten Ressourcen verbleiben, nachdem die Steuerinformationen von dem UE gemäß den Informationen über die SR-/CQI-Senderessourcen des ersten Schritts empfangen wurden.

9. Basisstation, BS, die an einer Zielzelle (405) gelegen ist, zum Unterstützen einer Übergabe einer Mobilstation, MS, (401), die sich von einer Quellenzelle (403) zu der Zielzelle bewegt, in einem drahtlosen Kommunikationssystem, die BS umfassend:
eine Steuerung, die konfiguriert ist zum Zuordnen von Terminanfrage-, SR-, und Kanalqualitätsinformations-, CQI-, Senderessourcen für die Übergabe zu der MS; und
einen Sender/Empfänger, der konfiguriert ist zum Senden, zu einer BS, die an der Quellenzelle gelegen ist, von Informationen, die sich auf die SR- und CQI-Ressourcen beziehen, Empfangen (445) von der MS einer Ressourcenzuordnungsanfrage für eine Übergabebestätigungsnachricht, Senden (450) von Informationen, die eine in einer Antwort auf die Ressourcenzuordnungsanfrage zugeordnete Funkressource angeben, an die MS, und Empfangen (455) einer Übergabebestätigungsnachricht, die eine Beendigung der Übergabe angibt, von der MS, wobei die Übergabebestätigungsnachricht von der MS unter Verwendung der Funkressource gesendet wird,
wobei die Übergabe keine Prozeduren erfordert, die mit einer Uplink-Zeitsynchronisierung zur Zielzelle verknüpft sind.

10. BS nach Anspruch 9, wobei die Informationen, die sich auf die SR- und CQI-Ressourcen beziehen, in einer Übergabebefehlsnachricht enthalten sind, die von der BS, die an der Quellenzelle gelegen ist, an die MS gesendet wird.

11. BS nach Anspruch 10, wobei die Übergabebefehlsnachricht mit einer Anzahl einer maximalen hybriden automatischen Wiederholungsanfrage, HARQ, oder weniger oft an die MS gesendet wird.

12. BS nach Anspruch 9, wobei die Steuerung ferner konfiguriert ist zum Vergleichen eines Zuordnungszyklus der zumindest einen der SR- und CQI-Senderessourcen mit einem bestimmten Schwellenwert und Einstellen des Zuordnungszyklus der zumindest einen der SR- und CQI-Senderessourcen, falls der Zuordnungszyklus der zumindest einen der SR- und CQI-Senderessourcen größer als der Schwellenwert ist.

13. BS nach Anspruch 12, wobei, wenn der Zuordnungszyklus der SR- und CQI-Senderessourcen eingestellt wird, die Steuerung ferner konfiguriert ist zum Neukonfigurieren der Informationen über die zumindest eine der SR- und CQI-Senderessourcen zu Informationen mehrerer Schritte gemäß dem Zuordnungszyklus, wobei zumindest eine der neukonfigurierten Informationen über die zumindest eine der SR- und CQI-Senderessourcen so eingestellt ist, dass der Zuordnungszyklus der zumindest einen der SR- und CQI-Senderessourcen kleiner als der Schwellenwert ist.

14. BS nach Anspruch 12, wobei die Steuerung den Schwellenwert unter Berücksichtigung einer Übergabeunterbrechungszeit einstellt.

15. BS nach Anspruch 13, wobei die neukonfigurierten Informationen über die zumindest eine der SR- und CQI-Senderessourcen in einer Übergabebefehlsnachricht enthalten sind, die an die MS gesendet wird, und Informationen über SR-/CQI-Senderessourcen des ersten Schritts, die in den neukonfigurierten SR- und CQI-Informationen über die Senderessourcen enthalten sind, für die MS verwendet werden, um eine Ressourcenzuordnung für eine Sendung der Übergabebestätigungsnachricht an die Zielzelle anzufordern, nachdem die MS die Übergabebefehlsnachricht erfolgreich von der Quellenzelle empfangen hat.

16. BS nach Anspruch 15, wobei die Übergabebefehlsnachricht mit einer maximalen HARQ-Anzahl oder weniger oft an die MS gesendet wird und die Steuerung ferner konfiguriert ist zum Freigeben einer Zuordnung unbenutzter Ressourcen in den SR-/CQI-Senderessourcen des ersten Schritts, wenn die unbenutzten Ressourcen verbleiben, nachdem die Steuerinformationen von dem UE gemäß den Informationen über die SR-/CQI-Senderessourcen des ersten Schritts empfangen wurden.

17. Übergabeverfahren einer Mobilstation, MS, (401) die sich von einer Quellenzelle (403) zu einer Zielzelle (405) bewegt, in einem drahtlosen Kommunikationssystem, das Verfahren umfassend:
Empfangen (430) von einer Basisstation, die an der Quellenzelle (403) gelegen ist, von Informationen, die sich auf Terminanfrage-, SR-, und Kanalqualitätsinformations-, CQI-, Senderessourcen für die Übergabe beziehen, die durch eine Basisstation, BS, die an der Zielzelle (405) gelegen ist, der MS zugeordnet wurden;
Senden (445) an die BS, die an der Zielzelle gelegen ist, einer Ressourcenzuordnungsanfrage für eine Übergabebestätigungsnachricht;
Empfangen (450) von der BS, die an der Zielzelle gelegen ist, von Informationen, die eine in einer Antwort auf die Ressourcenzuordnungsanfrage zugeordnete Funkressource angeben; und
Senden (455) einer Übergabebestätigungsnachricht, die eine Beendigung der Übergabe angibt, an die BS, die an der Zielzelle gelegen ist, unter Verwendung der Funkressource;
wobei die Übergabe keine Prozeduren erfordert, die mit einer Uplink-Zeitsynchronisierung zur Zielzelle verknüpft sind.

18. Übergabeverfahren nach Anspruch 17, wobei die Informationen, die sich auf die SR- und CQI-Ressourcen beziehen, in einer Übergabebefehlsnachricht enthalten sind, die von der BS, die an der Quellenzelle gelegen ist, empfangen wird.

19. Übergabeverfahren nach Anspruch 17, wobei die Informationen zu Informationen mehrerer Schritte gemäß einem Zuordnungszyklus der zumindest einen der SR- und CQI-Senderessourcen neu konfiguriert werden, wobei zumindest eine der neukonfigurierten Informationen über die zumindest eine der SR- und CQI-Senderessourcen so eingestellt ist, dass der Zuordnungszyklus der SR- und CQI-Senderessourcen des zumindest einen Schritts kleiner als ein bestimmter Schwellenwert ist und der Schwellenwert unter Berücksichtigung einer Übergabeunterbrechungszeit eingestellt ist.

20. Übergabeverfahren nach Anspruch 17, ferner umfassend:
Bestimmen, ob die Informationen über die zumindest eine der SR- und CQI-Senderessourcen Informationen über mehrere Schritte gemäß einem Zuordnungszyklus der zumindest einen der SR- und CQI-Senderessourcen enthalten; und
Senden der Ressourcenzuordnungsanfrage zum Senden der Übergabebestätigungsnachricht an die BS der Zielzelle unter Verwendung von Informationen über SR- und CQI-Senderessourcen des ersten Schritts in den Informationen über mehrere Schritte.

21. Mobilstation, MS, (401) zum Durchführen einer Übergabe von einer Quellenzelle (403) zu einer Zielzelle (405) in einem drahtlosen Kommunikationssystem, die MS umfassend:
einen Sender/Empfänger, der konfiguriert ist zum Empfangen, von einer Basisstation, die an der Quellenzelle (403) gelegen ist, von Informationen, die sich auf Terminanfrage-, SR-, und Kanalqualitätsinformations-, CQI-, Senderessourcen beziehen, für die Übergabe, die durch eine Basisstation, BS, die an der Zielzelle (405) gelegen ist, der MS zugeordnet ist, Senden (445) an die BS, die an der Zielzelle gelegen ist, einer Ressourcenzuordnungsanfrage für eine Übergabebestätigungsnachricht, Empfangen (450) von der BS, die an der Zielzelle gelegen ist, von Informationen, die eine in einer Antwort auf die Ressourcenzuordnungsanfrage zugeordnete Funkressource angeben, und Senden (455) einer Übergabebestätigungsnachricht, die eine Beendigung der Übergabe angibt, an die BS, die an der Zielzelle gelegen ist, unter Verwendung der Funkressource und
eine Steuerung, die konfiguriert ist zum Erkennen der zugeordneten Funkressourcen,
wobei die Übergabe keine Prozeduren erfordert, die mit einer Uplink-Zeitsynchronisierung zur Zielzelle verknüpft sind.

22. MS nach Anspruch 21, wobei die Informationen, die sich auf die SR- und CQI-Ressourcen beziehen, in einer Übergabebefehlsnachricht enthalten sind, die von der BS empfangen wird, die an der Quellenzelle gelegen ist.

23. MS nach Anspruch 21, wobei die Informationen über die SR- und CQI-Senderessourcen zu Informationen mehrerer Schritte gemäß einem Zuordnungszyklus der zumindest einen der SR- und CQI-Senderessourcen in der BS neu konfiguriert werden, wobei zumindest eine der neukonfigurierten Informationen über die zumindest eine der SR- und CQI-Senderessourcen so eingestellt ist, dass der Zuordnungszyklus der zumindest einen der SR- und CQI-Senderessourcen des zumindest einen Schritts kleiner als ein bestimmter Schwellenwert ist und der Schwellenwert unter Berücksichtigung einer Übergabeunterbrechungszeit eingestellt ist.

## Revendications

1. Procédé de transfert intercellulaire d'une station de base, BS, située au niveau d'une cellule cible (405) pour prendre en charge un transfert intercellulaire d'une station mobile, MS (401), se déplaçant d'une cellule source (403) vers la cellule cible (405) dans un système de communication sans fil, le procédé comprenant de :
allouer des ressources de transmission de demande de programmation, SR, et d'information de qualité de canal, CQI, pour le transfert intercellulaire vers la MS ;
transmettre, à une BS, située au niveau de la cellule source, une information relative aux ressources SR et CQI ;
recevoir (445), depuis la MS, une demande d'allocation de ressources pour un message de confirmation de transfert intercellulaire ;
transmettre (450), à la MS, une information indiquant une ressource radio allouée dans une réponse à la demande d'allocation de ressources ;
recevoir (455), de la MS, le message de confirmation de transfert intercellulaire indiquant un parachèvement du transfert intercellulaire, le message de confirmation de transfert intercellulaire étant transmis à partir de la MS en utilisant la ressource radio,
dans lequel le transfert intercellulaire n'a pas besoin des procédures associées à une synchronisation de temporisation en liaison montante vers la cellule cible.

2. Procédé de transfert intercellulaire selon la revendication 1, dans lequel l'information relative aux ressources SR et CQI est incluse dans un message de commande de transfert intercellulaire transmis à la MS à partir de la BS située au niveau de la cellule source.

3. Procédé de transfert intercellulaire selon la revendication 2, dans lequel le message de commande de transfert intercellulaire est transmis à la MS un nombre de fois de demande de répétition automatique hybride maximale HARQ ou inférieur.

4. Procédé de transfert intercellulaire selon la revendication 1, dans lequel l'allocation des ressources de transmission SR et CQI comprend en outre de :
comparer un cycle d'allocation d'au moins une des ressources de transmission SR et CQI avec un seuil particulier ; et
ajuster le cycle d'allocation d'au moins un des ressources de transmission SR et CQI lorsque le cycle d'allocation d'au moins une des ressources de transmission SR et CQI est supérieur au seuil.

5. Procédé de transfert intercellulaire selon la revendication 4, dans lequel l'ajustement du cycle d'allocation comprend en outre de :
reconfigurer l'information relative à au moins un des ressources de transmission SR et CQI en information d'une pluralité d'étapes selon le cycle d'allocation, dans lequel au moins une de l'information reconfigurée relative à au moins une ressource de transmission SR et CQI est réglée de sorte que le cycle d'allocation d'au moins un des ressources de transmission SR et CQI soit inférieur au seuil.

6. Procédé de transfert intercellulaire selon la revendication 4, dans lequel le seuil prend en compte un temps d'interruption de transfert intercellulaire.

7. Procédé de transfert intercellulaire selon la revendication 5, dans lequel l'information reconfigurée relative à au moins une des ressources de transmission SR et CQI est incluse dans un message de commande de transfert intercellulaire transmis à la MS et une information relative aux ressources de transmission de première étape SR/CQI incluse dans l'information reconfigurée relative à au moins une des ressources de transmission SR et CQI est utilisé pour la MS afin de demander une allocation de ressources en vue d'une transmission du message de configuration de transfert intercellulaire à la cellule cible après que la MS a reçu avec succès le message de commande de transfert intercellulaire provenant de la cellule source.

8. Procédé de transfert intercellulaire selon la revendication 7, dans lequel le message de commande de transfert intercellulaire est transmis un nombre de fois de transmissions HARQ maximales ou inférieur, comprenant en outre de libérer une allocation de ressources inutilisées dans les ressources de transmission de première étape SR/CQI lorsqu'il reste les ressources inutilisées après que l'information de commande a été reçue depuis l'UE selon l'information relative aux ressources de transmission de première étape SR/CQI.

9. Station de base, BS, située au niveau d'une cellule cible (405) pour prendre en charge un transfert intercellulaire d'une station mobile, MS (401), se déplaçant d'une cellule source (403) vers la cellule cible dans un système de communication sans fil, la BS comprenant :
un contrôleur configuré pour allouer des ressources de transmission de demande de programmation, SR, et d'information de qualité de canal, CQI, pour le transfert intercellulaire vers la MS ; et
un émetteur/récepteur configuré pour transmettre à une BS située au niveau de la cellule source une information relative aux ressources SR et CQI,
recevoir (445), de la MS, une demande d'allocation de ressources pour un message de confirmation de transfert intercellulaire,
transmettre (450), à la MS, une information indiquant une ressource radio allouée dans une réponse à la demande d'allocation de ressources et recevoir (455), de la MS, un message de confirmation de transfert intercellulaire indiquant un parachèvement du transfert intercellulaire, le message de confirmation de transfert intercellulaire étant transmis à partir de la MS en utilisant la ressource radio,
dans lequel le transfert intercellulaire n'a pas besoin des procédures associées à une synchronisation de temporisation en liaison montante vers la cellule cible.

10. BS selon la revendication 9, dans laquelle les informations relatives aux ressources SR et CQI sont incluses dans un message de commande de transfert intercellulaire transmis à la MS à partir de la BS située au niveau de la cellule source.

11. BS selon la revendication 10, dans laquelle le message de commande de transfert intercellulaire est transmis à la MS un nombre de fois d'une demande de répétition automatique hybride maximale HARQ ou inférieur.

12. BS selon la revendication 9, dans laquelle le contrôleur est en outre configuré pour comparer un cycle d'allocation d'au moins une des ressources de transmission SR et CQI avec un seuil particulier et ajuster le cycle d'allocation d'au moins une des ressources de transmission SR et CQI lorsque le cycle d'allocation d'au moins une des ressources de transmission SR et CQI est supérieur au seuil.

13. BS selon la revendication 12, dans laquelle le cycle d'allocation des ressources de transmission SR/CQI est ajusté, le contrôleur est en outre configuré pour reconfigurer une information relative à au moins une des ressources de transmission SR et CQI en une information d'une pluralité d'étapes selon le cycle d'allocation, dans lequel au moins une de l'information reconfigurée relative à au moins une des ressources de transmission SR et CQI est réglée de sorte que le cycle d'allocation d'au moins une ressource de transmission SR et CQI soit inférieur au seuil.

14. BS selon la revendication 12, dans laquelle le contrôleur règle le seuil en prenant en compte un temps d'interruption de transfert intercellulaire.

15. BS selon la revendication 13, dans laquelle l'information reconfigurée relative à au moins une des ressources de transmission SR et CQI est incluse dans un message de commande de transfert intercellulaire transmis à la MS et une information relative aux ressources de transmission de première étape SR/CQI incluse dans l'information reconfigurée relative à au moins une des ressources de transmission SR et CQI est utilisée pour la MS afin de demander une allocation de ressources en vue d'une transmission du message de configuration de transfert intercellulaire à la cellule cible après que la MS a reçu avec succès le message de commande de transfert intercellulaire provenant de la cellule source.

16. BS selon la revendication 15, dans laquelle le message de commande de transfert intercellulaire est transmis à la MS un nombre de fois de transmission HARQ maximal ou inférieur, et le contrôleur est en outre configuré pour libérer l'allocation de ressources inutilisées dans les ressources de transmission de première étape SR/CQI, lorsqu'il reste les ressources inutilisées après que l'information de commande a été reçue depuis l'UE selon l'information relative aux ressources de transmission de première étape SR/CQI.

17. Procédé de transfert intercellulaire d'une station mobile MS (401) se déplaçant d'une cellule source (403) à une cellule cible (405) dans un système de communication sans fil, le procédé comprenant de :
recevoir (430), depuis une station de base située au niveau de la cellule source (403), une information relative aux ressources de transmission de demande de programmation, SR, et d'information de qualité de canal, CQI, pour le transfert intercellulaire alloué à la MS par une station de base, BS, située au niveau de la cellule cible (405) ;
transmettre (445), à la BS située au niveau de la cellule cible, une demande d'allocation de ressources pour un message de confirmation de transfert intercellulaire ;
recevoir (450), de la BS situé au niveau de la cellule cible, une information indiquant une ressource radio allouée dans une réponse à la demande d'allocation de ressources ; et
transmettre (455), à la BS située au niveau de la cellule cible, un message de confirmation de transfert intercellulaire indiquant un parachèvement du transfert intercellulaire en utilisant la ressource radio ;
dans lequel le transfert intercellulaire n'a pas besoin des procédures associées à une synchronisation de temporisation en liaison montante vers la cellule cible.

18. Procédé de transfert intercellulaire selon la revendication 17, dans lequel l'information relative aux ressources SR et CQI est incluse dans un message de commande de transfert intercellulaire reçu depuis la BS située au niveau de la cellule source.

19. Procédé de transfert intercellulaire selon la revendication 17, dans lequel l'information est reconfigurée en information d'une pluralité d'étapes selon un cycle d'allocation d'au moins une des ressources de transmission SR et CQI, au moins une de l'information reconfigurée relative à au moins une des ressources de transmission SR et CQI est réglée de sorte que le cycle d'allocation des ressources de transmission SR/CQI d'au moins une étape soit inférieur à un seuil particulier et le seuil prend en compte un temps d'interruption de transfert intercellulaire.

20. Procédé de transfert intercellulaire selon la revendication 17, comprenant en outre de :
déterminer si l'information relative à au moins une des ressources de transmission SR et CQI inclut une information d'une pluralité d'étapes selon un cycle d'allocation d'au moins un des ressources de transmission SR et CQI ; et
transmettre la demande d'allocation de ressources en vue d'une transmission du message de confirmation de transfert intercellulaire à la BS de la cellule cible en utilisant une information relative aux sources de transmission de première étape SR/CQI dans l'information d'une pluralité d'étapes.

21. Station mobile MS (401) pour effectuer un transfert intercellulaire d'une cellule source (403) vers une cellule cible (405) dans un système de communication sans fil, la MS comprenant :
un émetteur/récepteur configuré pour recevoir, depuis une station de base située au niveau de la cellule source (403), une information relative aux ressources de transmission de demande de programmation SR et d'information de qualité de canal CQI pour le transfert intercellulaire alloué à la MS par une station de base, BS, située au niveau de la cellule cible (405),
transmettre (445), à la BS située au niveau de la cellule cible, une demande d'allocation de ressources pour un message de confirmation de transfert intercellulaire,
recevoir (450), de la BS située au niveau de la cellule cible, une information indiquant une ressource radio allouée dans une réponse à la demande d'allocation de ressources et transmettre (455), à la BS située au niveau de la cellule cible, un message de confirmation de transfert intercellulaire indiquant le parachèvement du transfert intercellulaire en utilisant la ressource radio et
un contrôleur configuré pour reconnaître les ressources radio allouées, dans lequel le transfert intercellulaire n'a pas besoin des procédures associées à une synchronisation de temporisation en liaison montante vers la cellule cible.

22. MS selon la revendication 21, dans laquelle l'information relative aux ressources SR et CQI est incluse dans un message de commande de transfert intercellulaire reçu de la BS situé au niveau de la cellule source.

23. MS selon la revendication 21, dans laquelle l'information relative aux ressources de transmission SR/CQI est reconfiguré en information d'une pluralité d'étapes selon un cycle d'allocation d'au moins une des ressources de transmission SR et CQI dans la BS, au moins une de l'information reconfigurée relative à au moins une des ressources de transmission SR et CQI est réglée de sorte que le cycle d'allocation d'au moins une des ressources de transmission SR et CQI d'au moins une étape est inférieure à un seuil particulier est le seuil prend en compte un temps d'interruption de transfert intercellulaire.
